# EUROPEAN PATENT APPLICATION

(11) **EP 4 675 834 A1**
(43) Date of publication of application: **07.01.2026**
(21) Application number: 23925450.1
(22) Date of filing: 28.12.2023
(51) Int. Cl.: H01M 50/526, H01M 50/505, H01M 50/522, H01M 50/524, H01M 50/588, H01M 50/591

(54) **BUS BAR, MANUFACTURING METHOD FOR BUS BAR, AND POWER STORAGE DEVICE**

(30) Priority: 28.02.2023 JP 2023030458
(71) Applicant: Ibiden Co., Ltd, Ogaki-shi, Gifu 503-8604 (JP)
(72) Inventor: KAWASAKI, Hironori, Ibi-gun, Gifu 501-0695 (JP); GOTO, Shinnosuke, Ibi-gun, Gifu 501-0695 (JP)
(74) Representative: Hoffmann Eitle
(86) International application number: PCT/JP2023/047226
(87) International publication number: WO 2024/180900

(57) **Abstract**

To provide a bus bar capable of stably ensuring an insulation property and capable of being protected from a high temperature or a flame from a battery cell in an abnormal state, and a method for producing a bus bar. A bus bar (1) includes a bus bar body (5) containing a conductive material and a heat-resistant insulating film (10) containing a filler and covering the bus bar body, in which the heat-resistant insulating film (10) has a surface roughness (Ry) of 0 < Ry < 50 [µm]. In addition, a method for producing the bus bar (1) includes a step of immersing the bus bar body (5) containing a conductive material in a heat-resistant insulating coating material to apply the heat-resistant insulating coating material to a surface of the bus bar body (5), and then drying the heat-resistant insulating coating material to form the heat-resistant insulating film (10).

## Description

### TECHNICAL FIELD

The present invention relates to a bus bar, a method for producing the same, and a power storage device in which a plurality of battery cells or battery modules are connected to each other by the bus bar.

### BACKGROUND ART

Various electronic devices, electric vehicles or hybrid vehicles driven by an electric motor, storage batteries, and the like are mounted with a power storage device in which a plurality of battery cells are connected in series or in parallel by a bus bar. In addition, a lithium ion secondary battery, which has higher capacity and is capable of higher output than a lead-acid battery, a nickel-metal hydride battery, or the like, is mainly used for the battery cells.

Since the bus bar is required to have an insulation property, in Patent Literature 1, a coating film composed of a resin such as an epoxy, an epoxy polyester, or a polyester is formed on a bus bar body such as a metal plate.

However, in the battery cell, an overcurrent is applied during charging and discharging, and the bus bar may generate heat, and in some cases, a flame may be generated. In such an abnormal state, a coating film composed of a resin as in Patent Literature 1 does not have sufficient heat resistance. Therefore, in Patent Literature 2, a bus bar body is covered with a mica sheet having an insulation property and heat resistance.

### CITATION LIST

### PATENT LITERATURE

Patent Literature 1: JP2021-48001A
Patent Literature 2: JP2020-528650A

### SUMMARY OF INVENTION

### TECHNICAL PROBLEM

However, in Patent Literature 2, it is necessary to wind the mica sheet around the bus bar body. The bus bar may have a complicated shape due to a spatial limitation of an installation location of the battery cell, and when the bus bar has a complicated shape, it is difficult to wind the mica sheet around every corner of the bus bar body. When the mica sheet has winding unevenness or a gap, no sufficient insulation property or heat resistance can be obtained. In addition, an adhesive surface of the mica sheet may be peeled off at a high temperature.

Further, in addition to a concern that a thickness of the sheet is thin at a wound portion of the mica sheet and is a starting point at which the insulation property and the heat resistance decrease, irregularities are formed on a surface of the bus bar and dimensional accuracy also decreases.

Therefore, an object of the present invention is to provide a bus bar that can stably ensure an insulation property and heat resistance by eliminating irregularities and dimensional unevenness on a surface and that can be protected from a high temperature or a flame from a battery cell in an abnormal state. Another object of the present invention is to provide a method for producing a bus bar that does not require a winding operation such as that for a mica sheet, that does not cause winding unevenness or a gap between sheets, that does not have a problem of sheet peeling off, that can even easily cope with a complicated shape, and that is also easy for production. Still another object of the present invention is to provide a power storage device in which a plurality of battery cells or battery modules are connected to each other by such a bus bar to exhibit high safety even in an abnormal state.

### SOLUTION TO PROBLEM

The above object of the present invention is achieved by the following configuration [1] relating to a bus bar.
[1] A bus bar for use in a power storage device including a battery cell, the bus bar including:
   a bus bar body containing a conductive material; and
   a heat-resistant insulating film containing a filler and covering the bus bar body, in which
   the heat-resistant insulating film has a surface roughness (Ry) of 0 < Ry < 50 [µm].

In addition, preferred embodiments of the present invention relating to the bus bar relate to the following [2] to [10].
[2] The bus bar according to [1], in which the filler includes an inorganic compound.
[3] The bus bar according to [2], in which the inorganic compound includes a silicate compound.
[4] The bus bar according to [3], in which the silicate compound is at least one kind selected from a glass-based material, mica, kaolin, talc, clay, pyrophyllite, montmorillonite, bentonite, wollastonite, xonotlite, zeolite, diatomaceous earth, and halloysite.
[5] The bus bar according to [4], in which the glass-based material is at least one kind selected from a flaky glass, a glass particle, a glass fiber, and a glass bead.
[6] The bus bar according to [4], in which the silicate compound includes at least one of a glass-based material and mica, and the glass-based material is a flaky glass.
[7] The bus bar according to any one of [1] to [6], in which a content of the filler with respect to all components in the heat-resistant insulating film is 3 vol% to 70 vol%.
[8] The bus bar according to any one of [1] to [6], in which the heat-resistant insulating film has a minimum film thickness of 300 µm or more.
[9] The bus bar according to any one of [1] to [6], in which the heat-resistant insulating film contains a silicone-based material.
[10] The bus bar according to any one of [1] to [6], in which the heat-resistant insulating film contains a silicone resin and a thixotropic agent.
In addition, the above object of the present invention is achieved by the following configuration [11] relating to a method for producing a bus bar.
[11] A method for producing a bus bar for use in a power storage device including a battery cell, the method including:
   a step of immersing a bus bar body containing a conductive material in a heat-resistant insulating coating material containing a filler to apply the heat-resistant insulating coating material to a surface of the bus bar body, and then drying the heat-resistant insulating coating material to form a heat-resistant insulating film, in which
   the heat-resistant insulating film is formed such that the heat-resistant insulating film has a surface roughness (Ry) of 0 < Ry < 50 [µm].

In addition, preferred embodiments of the present invention relating to the method for producing a bus bar relate to the following [12] to [20].
[12] The method for producing a bus bar according to [11], in which the filler includes an inorganic compound.
[13] The method for producing a bus bar according to [12], in which the inorganic compound includes a silicate compound.
[14] The method for producing a bus bar according to [13], in which the silicate compound is at least one kind selected from a glass-based material, mica, kaolin, talc, clay, pyrophyllite, montmorillonite, bentonite, wollastonite, xonotlite, zeolite, diatomaceous earth, and halloysite.
[15] The method for producing a bus bar according to [14], in which the glass-based material is at least one kind selected from a flaky glass, a glass particle, a glass fiber, and a glass bead.
[16] The method for producing a bus bar according to [14], in which the silicate compound includes at least one of a glass-based material and mica, and the glass-based material is a flaky glass.
[17] The method for producing a bus bar according to any one of [11] to [16], in which a content of the filler with respect to all solid components in the heat-resistant insulating coating material is 3 vol% to 70 vol%.
[18] The method for producing a bus bar according to any one of [11] to [16], in which the heat-resistant insulating coating material is applied to the bus bar body such that the heat-resistant insulating film after drying has a minimum film thickness of 300 µm or more.
[19] The method for producing a bus bar according to any one of [11] to [16], in which the heat-resistant insulating coating material contains a silicone-based material.
[20] The method for producing a bus bar according to any one of [11] to [16], in which the heat-resistant insulating coating material contains a silicone resin and a thixotropic agent.

In addition, the above object of the present invention is achieved by the following configuration [21] relating to a power storage device.

[21] A power storage device including:
a plurality of battery cells or battery modules connected to each other by the bus bar according to any one of [1] to [10].

### ADVANTAGEOUS EFFECTS OF INVENTION

In the bus bar according to the present invention, the bus bar body is covered with the heat-resistant insulating film having a surface roughness (Ry) of 0 < Ry < 50 [µm] and containing a filler. Therefore, the surface has excellent smoothness, there is no thin portion which becomes a starting point of a decrease in insulation property and heat resistance, and dimensional accuracy is also high.

In addition, in the method for producing a bus bar according to the present invention, since the heat-resistant insulating film is formed by dip coating, a production step is simple, and the heat-resistant insulating film can be formed without a gap regardless of a shape of the bus bar body.

Further, in the power storage device according to the present invention, since a plurality of battery cells or battery modules are connected to each other by such a bus bar, an insulation failure is less likely to occur, the heat resistance is excellent, and high safety is exhibited even in an abnormal state.

### BRIEF DESCRIPTION OF DRAWINGS

[Fig. 1] Fig. 1 is an exploded perspective view showing a state where an example of a bus bar according to the present invention is mounted to a battery cell.
[Fig. 2] Fig. 2 is a perspective view illustrating a method of measuring a minimum film thickness and a maximum film thickness of a heat-resistant insulating film.
[Fig. 3] Fig. 3 is a cross-sectional view showing an example of a power storage device according to the present invention.

### DESCRIPTION OF EMBODIMENTS

Hereinafter, an embodiment of the present invention will be described in detail with reference to the drawings. Note that, the present invention is not limited to the embodiment described below, and can be freely changed and implemented without departing from the gist of the present invention.

### [Bus Bar]

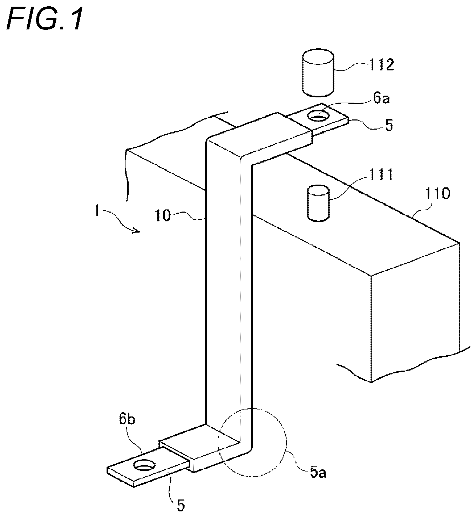

Fig. 1 is an exploded perspective view showing a state where a bus bar 1 according to the present embodiment is mounted to a battery cell 110. As shown in Fig. 1, a bus bar body 5 composed of a conductive material is, for example, a metal plate member having a Z-shape as a whole, and is to be fixed by inserting an electrode 111 of the battery cell 110 into a connection hole 6a at one tip and covering the electrode 111 with a terminal cap 112. A connection hole 6b at the other tip of the bus bar body 5A is connected to adjacent battery cells (not shown) or external devices (not shown). A portion (surface) excluding the connection holes 6a and 6b of the bus bar body 5 is covered with a heat-resistant insulating film 10, which is to be described later, thereby forming the bus bar 1.

Note that, although not shown, the bus bar body 5 may have various shapes depending on an installation location of the battery cell 110, such as an I-shape as a whole or an irregular shape having a curved portion.

When the bus bar body 5 has a shape having a bent portion 5a such as a Z-shape shown in Fig. 1 or a curved portion (not shown), in a method of winding a mica sheet as in the bus bar in Patent Literature 2, it is assumed that a winding operation takes time and effort to prevent the winding unevenness or the gap from occurring in the bent portion 5a or the curved portion, the gap is generated due to a vibration or the like, or an adhesive is peeled off. However, as to be described later, in the present embodiment, such a problem does not occur since the heat-resistant insulating film 10 is formed by "dip coating" in which the bus bar body 5 is immersed in a heat-resistant insulating coating material, pulled up, and then dried. In addition, the "dip coating" also has an advantage that the step is simple. Note that, in the present description, a heat-resistant insulating coating obtained by the "dip coating" can also be referred to as a "heat-resistant insulating coating film".

In the present embodiment, the heat-resistant insulating film 10 has a small surface roughness (Ry) of 0 < Ry < 50 [µm] and has excellent smoothness. The surface roughness (Ry) means a maximum height as specified in JIS B 0601-1994. In the method of winding a mica sheet as in Patent Literature 2, a thickness of the sheet is reduced at a wound portion of the mica sheet, irregularities are generated on a surface of the bus bar 1, and the smoothness as specified in the present invention cannot be realized. In a valley portion of the irregularities, the thickness of the sheet is small and becomes a starting point at which an insulation property and heat resistance decrease, but in the bus bar 1 according to the present invention having no irregularities on the surface, no irregularities that decrease the insulation property and the heat resistance is observed, and reliability is excellent. In addition, the bus bar 1 according to the present invention also has excellent dimensional accuracy and excellent product quality.

In addition, a surface of the bus bar body 5 may be unexpectedly damaged during storage or transportation. However, since the heat-resistant insulating film 10 is formed on the surface of the bus bar 1, the bus bar 1 does not reflect damage to the surface of the bus bar body 5.

In order to obtain such an effect, it is necessary to ensure that the surface roughness (Ry) of the heat-resistant insulating film 10 is less than 50 [µm]. The surface roughness (Ry) of the heat-resistant insulating film 10 is preferably as small as possible, more preferably 0 < Ry < 50 [µm], still more preferably 0 < Ry < 40 [µm], and even more preferably 0 < Ry < 30 [µm].

The heat-resistant insulating film 10 needs to have an insulation property and also have heat resistance or fire resistance to withstand heat generation or a flame from the battery cell 110 in an abnormal state, and preferably has a composition shown below.

When the heat-resistant insulating film 10 contains a filler, the heat resistance can be ensured. In addition, since an inorganic compound has a high melting point and more excellent heat resistance, the heat-resistant insulating film 10 more preferably contains an inorganic compound as the filler, and among these, more preferably contains a silicate compound.

The silicate compound is preferably at least one kind selected from a glass-based material, mica, kaolin, talc, clay, pyrophyllite, montmorillonite, bentonite, wollastonite, xonotlite, zeolite, diatomaceous earth, and halloysite.

In addition, the glass-based material is preferably at least one kind selected from a flaky glass, a glass particle, a glass fiber, and a glass bead.

These fillers need to have a small diameter in order to make the surface roughness (Ry) of the heat-resistant insulating film 10 less than 50 [µm], and an equivalent circle diameter thereof is preferably 10 µm or less, more preferably 1 µm or less, and still more preferably 0.1 µm or less. In addition, mica or a flaky glass is particularly preferred as the filler since mica or the flaky glass is oriented in a plane in the film and exhibits an excellent insulation property and heat resistance.

A content of the filler with respect to all components in the heat-resistant insulating film 10 is preferably 3 vol% to 70 vol%, more preferably 10 vol% to 60 vol%, and still more preferably 20 vol% to 50 vol%. When the content of the filler is less than 3 vol%, there is a concern that no sufficient insulation property and heat resistance can be obtained. As to be described later, the heat-resistant insulating film 10 is formed by "dip coating", but when the content of the filler is more than 70 vol%, a viscosity of the heat-resistant insulating coating material to be dipped is too high, and film formability is deteriorated. In addition, since the filler is a solid, there is a concern that the filler cannot satisfy the specified surface roughness (Ry).

In addition, the heat-resistant insulating film 10 preferably contains a silicone-based material as a binder because of its excellent incombustibility and heat resistance. Examples of the silicone-based material include a silicone resin, and a film thickness of the heat-resistant insulating film can be easily controlled by using a thixotropic agent in combination as a thickener.

Note that, in addition to the filler and the silicone-based material described above, the heat-resistant insulating film 10 may contain other materials such as a flame retardant, a dispersant, and a pigment as long as the insulation property and the heat resistance are not influenced.

A minimum film thickness of the heat-resistant insulating film 10 is preferably 300 µm or more. When the minimum film thickness is less than 300 µm, there is a concern that no sufficient insulation property and heat resistance can be obtained, and the minimum film thickness is more preferably 400 µm or more, and still more preferably 500 µm or more. Note that, as for an upper limit of the film thickness, even when the film thickness is increased more than necessary, further improvement of the insulation property and the heat resistance cannot be expected, and a defect in film quality such as cracks of the heat-resistant insulating film 10 is rather observed. Therefore, a maximum film thickness of the heat-resistant insulating film 10 is preferably 2,000 µm or less, more preferably 1,500 µm or less, and still more preferably 1,000 µm or less.

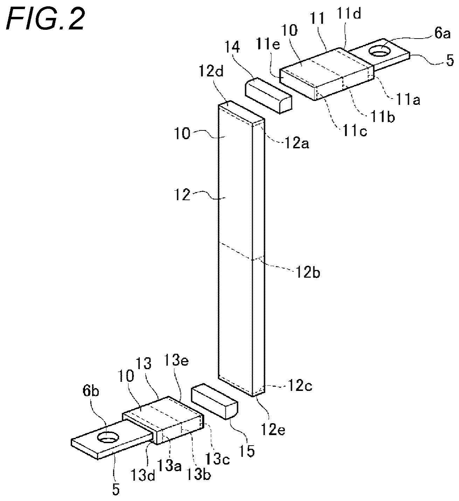

Here, a method of measuring the minimum film thickness and the maximum film thickness of the heat-resistant insulating film 10 in the bus bar 1 according to the present embodiment will be specifically described with reference to Fig. 2. Note that, Fig. 2 is a diagram in which all bent portions of the bus bar 1 shown in Fig. 1 are cut along two surfaces constituting an inner angle side and the bus bar 1 is divided into plate-shaped bodies 11, 12, and 13 and bent bodies 14 and 15. Since it is difficult to measure the film thickness of the heat-resistant insulating film 10 in the entire region formed on the surface of the bus bar body 5, in the present embodiment, the film thickness is measured by the following measurement method. Note that, the bent bodies 14 and 15 cut off when the bus bar 1 is cut along the two surfaces constituting the inner angle side are ignored in this measurement method.

For example, the plate-shaped body 12 is cut at three locations, i.e., film thickness measurement lines 12a, 12b, and 12c along a direction orthogonal to a longitudinal direction thereof. The positions of the film thickness measurement line 12a and the film thickness measurement line 12c are set to positions 1 mm inward from end surfaces 12d and 12e in the longitudinal direction of the plate-shaped body 12, respectively. In addition, the position of the film thickness measurement line 12b is set to a central position between the film thickness measurement line 12a and the film thickness measurement line 12c.

The plate-shaped body 11 is cut at three locations, i.e., film thickness measurement lines 11a, 11b, and 11c in a direction same as the cutting direction of the plate-shaped body 12. Note that, the connection hole 6a is provided at one end portion of the plate-shaped body 11, and there is a possibility that the film thickness of the heat-resistant insulating film 10 is not stable near an end portion 11d on a connection hole 6a side. Therefore, the position of the film thickness measurement line 11a is set to a position 5 mm inward from the end portion 11d in the heat-resistant insulating film 10. In addition, the position of the film thickness measurement line 11c is set to a position 1 mm inward from the other end surface 11e of the plate-shaped body 11, and the position of the film thickness measurement line 11b is set to a central position between the film thickness measurement line 11a and the film thickness measurement line 11c.

Similar to the plate-shaped body 11, since the connection hole 6b is provided at one end portion of the plate-shaped body 13, the position of a film thickness measurement line 13a is set to a position 5 mm inward from an end portion 13d in the heat-resistant insulating film 10. In addition, the position of a film thickness measurement line 13c is set to a position 1 mm inward from the other end surface 13e of the plate-shaped body 13, and the position of a film thickness measurement line 13b is set to a central position between the film thickness measurement line 13a and the film thickness measurement line 13c.

As described above, the three plate-shaped bodies 11, 12, and 13 are cut along the film thickness measurement lines 11a to 11c, 12a to 12c, and 13a to 13c, respectively, and a total of nine cut surfaces are photographed. Then, image processing is performed on each photograph, and a distance from the surface of the bus bar body 5 to the surface of the heat-resistant insulating film 10 is measured, and the smallest film thickness is defined as the minimum film thickness, and the largest film thickness is defined as the maximum film thickness.

Note that, although not shown, in the case where the bus bar has a shape having a curved portion, it is preferable that a curved body cut off when the bus bar is cut into plate-shaped bodies is also cut at a position 1 mm inward from end surfaces and at a central position thereof in the same manner as the above method, and the film thickness is measured.

### [Method for Producing Bus Bar]

In order to produce the bus bar 1, the heat-resistant insulating film 10 is formed on the surface of the bus bar body 5 by "dip coating". Specifically, a predetermined amount of a filler is added to a silicone resin and sufficiently mixed to prepare a heat-resistant insulating coating material. Then, peripheries of the connection holes 6a and 6b (see Fig. 1) of the bus bar body 5 are masked, the bus bar body 5 is immersed in a heat-resistant insulating coating material to apply the insulating coating material to the surface of the bus bar body 5, then the bus bar body 5 is pulled up, and the heat-resistant insulating coating material is dried to form a heat-resistant insulating film.

As for an amount of the heat-resistant insulating coating material to be applied, it is preferable to appropriately adjust a pulling up speed, a drying temperature, and the like such that the minimum film thickness after drying (that is, the minimum film thickness of the heat-resistant insulating film 10) is 300 µm or more, preferably 400 µm or more, and more preferably 500 µm or more.

In addition, a content of the filler with respect to all solid components in the heat-resistant insulating coating material is preferably 3 vol% to 70 vol%, more preferably 10 vol% to 60 vol%, and still more preferably 20 vol% to 50 vol%. As described above, when the content of the filler is less than 3 vol%, there is a concern that no sufficient insulation property and heat resistance can be obtained. On the other hand, when the content of the filler is more than 70 vol%, there is a concern that the viscosity of the heat-resistant insulating coating material is too high, the film formability is deteriorated, and the specified surface roughness (Ry) cannot be satisfied.

In the method of winding the mica sheet as in Patent Literature 2, a winding operation is required, and in particular, the winding operation takes time and effort to prevent the winding unevenness or the gap from occurring in the bent portion 5a or the curved portion. In addition, it is assumed that the gap is generated due to a vibration or the like, or the adhesive is peeled off. However, in the present invention, since the heat-resistant insulating film 10 is formed by "dip coating", such a problem does not occur.

In addition, the heat-resistant insulating film 10 does not have a wound portion like a mica sheet, and the insulation property and the heat resistance do not decrease. Further, since the surface roughness (Ry) of the heat-resistant insulating film 10 is reduced to less than 50 [µm], the dimensional accuracy of the bus bar 1 is also high.

### [Power Storage Device]

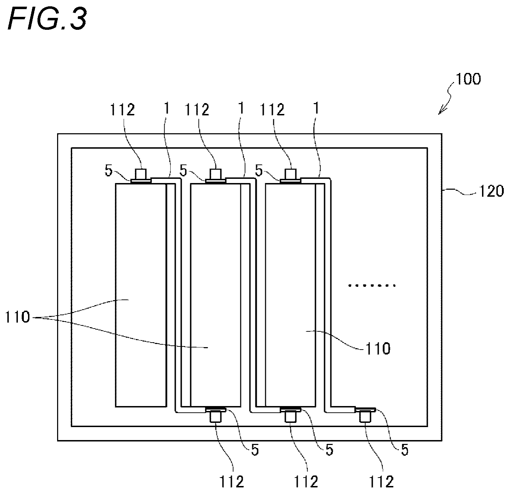

As shown in Fig. 3, a power storage device 100 includes a plurality of battery cells 110 housed in a battery case 120. The adjacent battery cell 110 and battery cell 110 are connected to each other by the bus bar 1. Note that, reference numeral 112 in the drawing denotes a terminal cap (see Fig. 1).

Since the bus bar 1 is covered with the heat-resistant insulating film 10 and has very few irregularities such as a decrease in insulation property and heat resistance, the bus bar 1 can be protected even when a certain battery cell 110 experiences thermal runaway.

In the power storage device according to the present embodiment, since the plurality of battery cells 110 or battery modules (not shown) are connected to each other by the bus bar 1, it is possible to prevent a chain reaction of the thermal runaway to the adjacent battery cell 110 via the bus bar 1, and high safety is exhibited even in an abnormal state.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-030458) filed on February 28, 2023, and the contents thereof are incorporated herein by reference.

### REFERENCE SIGNS LIST

1 bus bar
5 bus bar body
6a, 6b connection hole
10 heat-resistant insulating film
100 power storage device
110 battery cell
111 electrode
120 battery case

## Claims

1. A bus bar for use in a power storage device including a battery cell, the bus bar comprising:
a bus bar body containing a conductive material; and
a heat-resistant insulating film containing a filler and covering the bus bar body, wherein
the heat-resistant insulating film has a surface roughness (Ry) of 0 < Ry < 50 [µm].

2. The bus bar according to claim 1, wherein the filler includes an inorganic compound.

3. The bus bar according to claim 2, wherein the inorganic compound includes a silicate compound.

4. The bus bar according to claim 3, wherein the silicate compound is at least one kind selected from a glass-based material, mica, kaolin, talc, clay, pyrophyllite, montmorillonite, bentonite, wollastonite, xonotlite, zeolite, diatomaceous earth, and halloysite.

5. The bus bar according to claim 4, wherein the glass-based material is at least one kind selected from a flaky glass, a glass particle, a glass fiber, and a glass bead.

6. The bus bar according to claim 4, wherein the silicate compound includes at least one of a glass-based material and mica, and the glass-based material is a flaky glass.

7. The bus bar according to any one of claims 1 to 6, wherein a content of the filler with respect to all components in the heat-resistant insulating film is 3 vol% to 70 vol%.

8. The bus bar according to any one of claims 1 to 6, wherein the heat-resistant insulating film has a minimum film thickness of 300 µm or more.

9. The bus bar according to any one of claims 1 to 6, wherein the heat-resistant insulating film contains a silicone-based material.

10. The bus bar according to any one of claims 1 to 6, wherein the heat-resistant insulating film contains a silicone resin and a thixotropic agent.

11. A method for producing a bus bar for use in a power storage device including a battery cell, the method comprising:
a step of immersing a bus bar body containing a conductive material in a heat-resistant insulating coating material containing a filler to apply the heat-resistant insulating coating material to a surface of the bus bar body, and then drying the heat-resistant insulating coating material to form a heat-resistant insulating film, wherein
the heat-resistant insulating film is formed such that the heat-resistant insulating film has a surface roughness (Ry) of 0 < Ry < 50 [µm].

12. The method for producing a bus bar according to claim 11, wherein the filler includes an inorganic compound.

13. The method for producing a bus bar according to claim 12, wherein the inorganic compound includes a silicate compound.

14. The method for producing a bus bar according to claim 13, wherein the silicate compound is at least one kind selected from a glass-based material, mica, kaolin, talc, clay, pyrophyllite, montmorillonite, bentonite, wollastonite, xonotlite, zeolite, diatomaceous earth, and halloysite.

15. The method for producing a bus bar according to claim 14, wherein the glass-based material is at least one kind selected from a flaky glass, a glass particle, a glass fiber, and a glass bead.

16. The method for producing a bus bar according to claim 14, wherein the silicate compound includes at least one of a glass-based material and mica, and the glass-based material is a flaky glass.

17. The method for producing a bus bar according to any one of claims 11 to 16, wherein a content of the filler with respect to all solid components in the heat-resistant insulating coating material is 3 vol% to 70 vol%.

18. The method for producing a bus bar according to any one of claims 11 to 16, wherein the heat-resistant insulating coating material is applied to the bus bar body such that the heat-resistant insulating film after drying has a minimum film thickness of 300 µm or more.

19. The method for producing a bus bar according to any one of claims 11 to 16, wherein the heat-resistant insulating coating material contains a silicone-based material.

20. The method for producing a bus bar according to any one of claims 11 to 16, wherein the heat-resistant insulating coating material contains a silicone resin and a thixotropic agent.

21. A power storage device comprising:
a plurality of battery cells or battery modules connected to each other by the bus bar according to any one of claims 1 to 6.
